# EUROPEAN PATENT APPLICATION

(11) **EP 2 431 714 A1**
(43) Date of publication of application: **21.03.2012**
(21) Application number: 10178053.4
(22) Date of filing: 21.09.2010
(51) Int. Cl.: G01D 3/08, F16D 7/00, F16D 43/20, G01L 3/14

(54) **Slip measurement assembly**

(71) Applicant: Zero-Max Holding DK A/S, 8600 Silkeborg (DK)
(72) Inventor: The designation of the inventor has not yet been filed
(74) Representative: Tellefsen, Jens J.

(57) **Abstract**

A slip measurement assembly for detecting a slip between an input shaft and an output shaft of a torque limiter assembly. The slip measurement assembly comprises a first rotation sensor generating a first rotation signal in response to the rotational motion of the input shaft, preferably by measuring the rotational speed of the input shaft, and further, a second rotation sensor generating a second rotation signal in response to the rotational motion of the output shaft, preferably by measuring the rotational speed of the output shaft. The slip measurement assembly further comprises a torque sensor generating a torque signal in response to the torque applied to the input shaft and/or the output shaft, and finally, the slip measurement assembly comprises a processing unit connected to the first rotation sensor, the second rotation sensor and the torque sensor for receiving the first rotation signal, the second rotation signal and the torque signal and determining a relative rotation value and a torque value associated with the relative rotation value on the basis of the first rotation signal, the second rotation signal and the torque signal.

## Description

The present invention relates to a slip measurement assembly, a torque limiter assembly, a rotating mechanical power transmission system and a method of determining a relative rotation value and a torque value associated with the relative rotation value.

Torque limiter assembles are well known in the art of rotating mechanical power transmission systems as essential safely devices for preventing damages to mechanical equipment. A torque limiter assembly which is also known as a slip clutch assembly, is used to provide an accurate torque overload protection for many different kinds of rotating mechanical power transmission systems, such as wind power plants, hydroelectric plants, hydraulic systems and engines. In particular, the torque limiter assembly is employed as a coupling between a torque supplying shaft also known as an input shaft, and a torque receiving shaft also known as an output shaft. The torque supplying shaft receives input torque from a torque generating device, such as an engine or a turbine, which in turn is powered by e.g. wind, water, steam, gas or the The torque receiving shaft transmits the torque to a torque receiving appliance such as an electrical generator, a tool such as a drill or any other industrial machinery requiring an input of torque for operating. Gearboxes are typical used at the supplying shaft and/or receiving shaft in order to adjust the rotational speed and the torque delivered from the torque generating device to fit the receiving appliance.

During regular non-overload operation of the mechanical power transmission system, the torque limiter assembly transfers substantially the full amount of torque generated by the torque generating device via the torque supplying shaft to the torque receiving shaft and the receiving appliance, except for the minimal friction losses occurring in every mechanical power transmission system. In case of a non-regular operation, in which the torque generated by the torque supplying shaft exceeds a specific torque value, the torque limiter assembly limits the torque to the specific torque value or a lesser value. The specific torque value should correspond to an approved rating of the mechanical power transmission system. The rating indicates the maximum torque which may occur in the mechanical power transmission system while still ensuring a safe operation in order to avoid damages in the mechanical power transmission systems due to torque overload. Damages due to torque overload may otherwise occur in the torque receiving appliance, in shafts and/or gears of the mechanical power transmission system and/or in the torque generating device. Such damages often result in a permanent breakdown of the system and may require very extensive and expensive repairs,

An irregular operation, i.e. a torque overload operation, may be caused by a jam in the shaft or gear of the mechanical power transmission system. Alternatively, the overload operation may be caused by a failure or jam in the torque generating device, either due to an unexpectedly high input power caused by e.g. a storm in case of a wind turbine as the torque generating device, or a flood in case of a water turbine as the torque generating device. Alternatively, the torque overload operation may be caused by a jam or a failure of a torque receiving appliance, e.g. a short circuit of a generator or in an electrical power supply network. In such cases the intrinsic rotational energy of the torque generating device may cause an excessive rotational momentum to occur on the torque supply shaft. Occasionally, an overload operation may occur due to a Jam in the torque generating device. In such cases, the intrinsic rotational energy of the torque receiving appliance may cause an excessive rotational momentum to occur on the torque supply shaft, thereby causing the torque receiving device to supply torque to the torque generating device. In such situations, the role of the torque input shaft and the torque output shaft are effectively reversed.

In all of the above torque overload operations, the torque limiter assembly is employed to limit the torque transferred by the mechanical power transmission systems. Such torque limiter assemblies typically utilize two parts, such as plates, which are in friction contact and which during regular operation rotate synchronously but which slip or slide in relation to each other in case of a torque overload. Such torque limiter assemblies have been manufactured by the applicant company and are described in e.g. the international patent application WO 2008/049428 of the applicant company. Similar devices are described in the German utility model DE 20 2005 000215 U1, describing a Slip clutch employing a spring washer. Further prior art documents include US 3 319 508 describing a resilient retaining ring and US 4 338 798, describing an adjustable torque limited apparatus with frictionally coupled discs.

In general, rotating mechanical power transmission systems known in the art do measured the rotational speed of at least some rotating shaft of the system in order to ensure that the mechanical power transmission system is operating within its intended operating range. During regular operation, the rotational speed of all rotating parts of the rotating mechanical power transmission system may typically be predicted by measuring the rotational speed of only one rotating element of the rotating mechanical power transmission system since the rotation is typically synchronous between all parts of the rotating mechanical power transmission system, In rotating mechanical power transmission systems without a gearbox, all parts of the system will rotate at substantially the same speed. In case a gearbox is employed within the rotating mechanical power transmission system, the rotating speed of the parts located on opposing side of the gearbox will differ by a constant gear ratio, permitting the rotational speed of the non measured part(s) of the rotating mechanical system to be calculated. The gear ratio may also be adjustable, however, knowing the gear ratio will still allow rotational speed of the non measured part(s) of the rotating mechanical system to be calculated. However, in case of an irregular operation, the input shaft and the output shaft of the torque limiter assembly will rotate at different speeds. Further, the speed of the non measured shaft of the torque limiter assembly cannot be simply derived from the speed of the measured shaft since the speed difference, i.e. the relative speed, between the input shaft and the output shaft is depending on the friction between the discs of the torque limiter and on the respective torque applied to the input shaft and the output shaft. Thus, in conventional systems, a user cannot be aware of whether an irregular operation has occurred or not.

In US 4,660,697, which is hereby incorporated by reference, a torque system is disclosed, in which a slip detection sensor is employed. The slip detection sensor is made up of two sensors which detect the rotational speeds of the output shaft and input shaft, respectively.

In the above system, a user may determine whether a slip between the input shaft and the output shaft has occurred or not by using the slip detection sensor. However, the occurrence of slip does not necessarily mean that a catastrophic failure has occurred. Most often, the slip is occurring due to a temporary increase in the torque and the regular operation will resume within a short time period again. In other cases the slip may occur due to a non-functional torque limiter. A non-functional torque limiter is a clip clutch which allows a slip at torque values within the regular operation, i.e. at torque values being either higher or lower compared to the specified or rated torque value of the particular torque limiter. A worn out or non-adjusted torque limiter is examples of situations which may cause a slip outside the specified or rated torque value. By monitoring relative speed of the input shaft and the output shalt the user would be alerted every time a slip occur and may believe that an irregular operation is occurring although a torque limiter which is non-functional may cause a slip at regular operation.

Further prior art explaining the background of the present invention include US 6,481,296, WO2005/012763A1, US2010/005232GA1, US 2009/0188324A1, DE 10 2006 034 041 A1, EP 2 213 995 and US 6,035,984, which US documents are hereby incorporated by reference.

It is an object of the present invention to provide methods and systems for allowing a user to determine whether a slip caused by irregular operation or a non-functional torque limiter.

There is further a need for methods and systems for allowing maintenance staff to determine when a torque limiter must be exchanged or overhauled.

Further, since an irregular operation may have various causes, as discussed above, it would further be an advantage to be able to determine the cause of irregular operation, such that the user is only alerted in case of a serious or permanent irregular operation.

The above object, the above feature and the above advantage together with numerous other object, advantages and features which will be evident from the below detailed description of the present invention, is according to a first aspect of the present invention obtained by a slip measurement assembly for detecting a slip between an input shaft and an output shaft of a torque limiter assembly, the slip measurement assembly comprising:
a first rotation sensor generating a first rotation signal in response to the rotational motion of the input shaft, preferably by measuring the rotational speed of the input shaft.
a second rotation sensor generating a second rotation signal in response to the rotational motion of the output shaft, preferably by measuring the rotational speed of the output shaft,
a torque sensor generating a torque signal in response to the torque applied to the input shaft and/or the output shaft, and
a processing unit connected to the first rotation sensor, the second rotation sensor and the torque sensor for receiving the first signal, the second rotation signal and the torque signal and determining a relative rotation value and a torque value associated with the relative rotation value on the basis of the first rotation signal, the second rotation signal and the torque signal.

A torque limiter essentially composes two opposing discs which are being pressed together to achieve a specific friction between the discs. The friction value between the discs determines the rating of the torque limiter, i.e. specific torque above which a slip between the discs is provoked. The friction value may be adjusted by changing the pressure and/or the material of the discs. The input shaft and the output shaft of the torque limiter assembly are connected to respective opposing sides of the respective opposing discs of the torque limiter. The input shaft is typically the torque generates shaft and the output shaft is typically the torque receiving shaft, however, in some cases under irregular operation, the input shaft may become the torque receiving shaft and the output shaft may become the torque generating shaft, i.e. in case of a stalling torque generator. The first and second rotation sensors are preferably located as close to the torque limiter as possible on the opposing input and output shafts. However, in some embodiments it may be advantageous to use already existing rotation sensors further away from the torque limiter. Further, the rotational motion of the shafts may either be measured directly, or derived by measuring the motion of another part, e.g. a gear box, connected to the torque limiter assembly. The respective first and second rotation sensors generate a first and second rotation signal representing the rotational motion of the respective shafts The torque signal represents the instant torque applied to the input shaft and/or the output shaft.

The torque sensor may comprise a single torque sensor located as close to the torque limiter as possible. However, preferably two torque sensors are employed, one located on each of the input and output shafts. In an alternative embodiment, the torque signal may be derived by measuring the torque of another part connected to the torque limiter assembly. The torque signal is representing the torque applied on the shaft.

The first rotation signal, the second rotation signal and the torque signal may preferably be digital signals, however, analogue signals are equally feasible. The signals are communicated to the processing unit by e.g. fiberoptic cables, coaxial cables or wirelessly. The first rotation signal and the second rotation signal may be e.g. a numeric value directly corresponding to the speed of the respective input and output shafts or the number of revolutions of the input shaft and output shaft, respectively. Alternatively, a series of impulses may be generated for each turn of the shaft The processing unit is preferably a microcomputer or similar, however, an analogue processing unit is equally feasible, The signal are received and preferably stored in a memory unit within the processing unit Optionally, the signals may be filtered to remove measurement noise. The processing unit may include a timer in order to calculate first and second rotation values, i.e. number of revolutions per time period of the input shaft and output shaft, respectively, in case the rotation signal is given as a series of impulses or in any other form. The calculation unit may also calculate the relative rotation value which is calcutated as the difference between the first rotation value and the second rotation value. The relative rotation value may be distinguished in positive and negative relative rotation. The positive and negative rotation may be stored separately. The relative rotation value may be positive or negative deepening on the rotational direction of the shaft and whether the slip was caused by the torque generating device or the torque receiving device. The torque value may be calculated as the average torque value applied over a certain time period, such as a few milliseconds.

The relative rotation value and the torque value may be stored continuously. The calculation unit may include specific ranges or limits of the torque value, first rotation value, second rotation value, relative rotation value and/or a combination of the above. In case the torque limiter is operating outside the specific ranges or limits, certain failure modes or diagnosis modes may be triggered and in some cases a message may be communicated to the user.

According to a further embodiment of the slip measurement assembly according to the first aspect of the present invention, the first rotation sensor and/or the second rotation sensor composing:
an impulse generator for being mounted synchronously rotatable in relation to the input shaft and/or the output shaft, and,
an impulse receiver for being mounted fixedly and non-rotatable in a juxtaposing location in relation to the impulse generator,
   the first rotation signal and/or the second rotation signal representing the number of impulses received by the impulse receiver during a specific time period.

The first rotation signal and the second rotation signal may constitute a series of impulses generated by the impulse generator and received by the impulse receiver. Each impulse received by the impulse receiver may correspond to a specific rotation angle of the input shaft and output shaft, respectively, In one embodiment one impulse corresponds to one full revolution one input shaft or output shaft, respectively. The impulse generator should be rotating synchronously with the shaft. Syncronous should in the present context encompass impulse generators rotating by a specific ratio in relation to the shaft, such as when using a gear, allowing for the actual rotation of the shaft to be simply derived.

According to a further embodiment of the slip measurement assembly according to the first aspect of the present invention, a plurality of impulse generators and/or impulse receivers are mounted along an angular direction of the outwardly facing surface of the input shaft and/or the output shaft.

By using one impulse generator and one impulse receiver per shaft, the shaft rotate one revolution per impulse. In order to increase the accuracy of the measurement, the number of impulse generators or impose receivers may be increased. For instance in case two impulse generators are used, the single impulse receiver will receive two impulses per revolution. Preferably, the impulse generators are equally distributed along the angular direction of the outer surface of the shaft such that, in case impulse generators are used. ½ revolution gives one impulse. Alternatively or in addition to the above, the number of impulse receivers may be increased and preferably the impulse generators and impulse receivers are distributed along the angular direction of the outer surface of the shaft such that e.g. in case two generators and two impulse receivers are used, ¼ revolution gives one impulse.

According to a further embodiment of the slip measurement assembly according to the first aspect of the present invention, the impulse generator comprises a reflector or a hole plate and the impulse receiver comprises a photo detector, or, alternatively, wherein the impulse generator comprises a magnet and the impulse receiver comprises a coil.

The impulse generator may comprise a reflector which is mounted directly on the shaft. The reflector is used to direct a beam of light towards the receiver such that only when the reflector is oriented in a specific angular position, the light beam is reflected and received by the photo detector. The light beam may be originating from a light source located at the photo detector. In case an intrinsically reflecting shaft is used, some parts of the shaft may be painted in non reflecting colour, such as black. Alternatively, a hole plate, i.e. a circular plate through which a number of holes has been drilled at a specific distance from the centre, is employed. The hole plate should be rotating synchronously with the shaft. The photo detector and the light source may be positioned on opposite sides of the hole plate. Yet alternatively, the impulse generator may comprise a magnet and the impulse receiver may comprise a coil, arranged such that each time the magnet passes the coil, a current impulse is induced into the coil.

According to a further embodiment of the slip measurement assembly according to the first aspect of the present invention, each of the input shaft and the output shaft comprises at least one torque sensor, preferably more than one such as 2-3, more preferably 4-5 or more,

In yet a further embodiment, a plurality of torque sensors is applied on each of the input shaft and output shaft. In this way redundancy may be achieved and/or torque in different location and/or directions may be measured.

According to a further embodiment of the slip measurement assembly according to the first aspect of the present invention, the torque sensor comprises a strain gauge.

A strain gauge measures the strain on the shaft, It may comprise an electrical conductor connected to the shaft and a resistance measurement circuit connected to the conductor. In case the strain increases, the conductor will elongate and thus an increased resistance will be measured by the resistance measurement circuit.

According to a further embodiment of the slip measurement assembly according to the first aspect of the present invention, the torque sensor is detachably mounted on the input shaft and/or the output shaft.

The torque sensor may be detachably mounted on the shaft. In this way the torque sensor may be retrofitted easily and possibly without any new approval of the mechanical power transmission system as such. The torque sensor may e.g. be adhered to the shaft or provided in parts which are easy to assemble around the shaft.

According to a further embodiment of the slip measurement assembly according to the first aspect of the present invention, the torque sensor and/or the first rotation sensor and/or the second rotation sensor unit is communicating via wireless technology with the processing unit.

By allowing the sensors and the processing unit to communicate by wireless technology, the processing unit may be positioned at a remote location which is easily accessed by the used. Further, since at least some parts of the sensors are rotating, it may be difficult to assemble a non wireless communication system and the reliability may improve by using wireless technologies.. The wireless technology may include by IR, microwave or radio frequencies. Wireless data transfer technologies are generally known in systems such as Bluetooth, WLAN or GSM. In particular, such technologies are disclosed in Chinese patent applications CN11232520A and CN11267291A.

The above object, the above feature and the above advantage together with numerous other objects, advantages and features which will be evident from the below detailed description of the present invention is according to a second aspect of the present invention obtained by a torque limiter assembly including an input shaft, an output shaft and a torque limiter located between the input shaft and the output shaft, the torque limiter assembly further including a slip measurement assembly according to the first aspect of the present inventions.

It is evident that the present assembly according to the first aspect may be connected to a torque limiter assembly including an input shaft, an output shaft and a torque limiter connected therebetween. Preferably, the torque limiter is a torque limiting Slip clutch which allows the transfer of torque up to a specific limit before slipping.

In a further embodiment of the second aspect, the input shaft and/or the output shaft further includes a gear box.

In case a gearbox is used, it may be connected to the input shaft and/or the output shaft in order to adjust the torque and the rotational speed to a level which is suitable in order for other parts of the rotating mechanical power transmission system to work properly and with high efficiency.

The above object, the above feature and the above advantage together with numerous other objects, advantages and features which will be evident from the below detailed description of the present invention is according to a third aspect of the present invention obtained by a rotating mechanical power transmission system including the torque limiter assembly according to the second aspect, the rotating mechanical power transmission system further including a torque generating device such as an engine, a wind turbine, a water turbine or a steam turbine, connected to the input and, a torque receiving device, such as an electrical generator or a hydraulic pump, connected to the torque output shaft.

The slipping limit is determined by the mechanical properties of the shaft itself or of the optional gearbox. Alternatively, the slipping limit may be determined by other parts of the rotating mechanical power transmission system, such as the torque generating device, e.g. a turbine, or the torque receiving device, e.g. the generator or the pump.

In a father embodiment of the third aspect, the torque generating device and/or the torque receiving device is at least partially controlled by the processing unit.

It is particularly useful to allow some of the values calculated by the processing unit for controlling parts of the rotating mechanical power transmission system. For instance, the torque value or the rotation values may be used to adjust the turbine to increase the efficiency. Further, the gearbox and/or the generator may be adjusted depending on the above mentioned values.

The above object, the above feature and the above advantage together with other objects, advantages and features which will be evident from the below detailed description of the present invention is according to a fourth aspect of the present invention obtained by a method of determining relative rotation value and a torque value associated with the relative rotation value, the method comprising the steps of:
providing a torque limiter assembly including an input shaft, an output shaft and a torque limiter located between the input shaft and the output shaft, the torque limiter assembly further including a slip measurement assembly including a first rotation sensor, a second rotation sensor, a torque and a processing unit connected to the first rotation sensor, the second rotation sensor and the torque sensor ,
generating a first rotation signal in response to the rotational motion of the input shaft by using the first rotation sensor,
generating a second rotation signal in response to the rotational motion of the output shaft by using the second rotation sensor,
generating a torque signal in response to the torque applied to the input shaft and/or the output shaft by using the torque sensor,
receiving the first rotation signal, the second rotation signal and the torque signal in the processing unit,
determining in the relative rotation value on the basis of the first rotation signal and the second rotation signal by using the processing unit, and,
determining the torque value on the basis of the torque signal by using the processing unit.

It is evident that the above method according to the fourth aspect of the present invention may be applied to any of the assembles and systems according to the first, second and third aspect of the present invention.

In a further embodiment of the fourth aspect, the method further includes calculating and storing one or more technical values by using the processing unit, the technical values being absolute rotation speed of the first shaft, absolute rotation speed of the second shaft, relative rotation speed of the first and second shafts, accumulated angular difference between the first and second shafts, torque on the first and/or second shafts.

The above mentioned technical values are easily derived, from the above mentioned signals. The technical values may be stored for subsequently being sent to the user via e.g. GSM or cable bound communication. The user may also be able to plot the technical values.

in a further embodiment of the fourth aspect, the method further including the steps of: mounting the torque limiter assembly between a torque generating device and/or a torque receiving device of a rotating mechanical power transmission system, and,
using the technical values for controlling the torque generating device and/or the torque receiving device of the rotating mechanical power transmission system, and/or, using the technical values when performing maintenance and/or adjustments on the rotating mechanical power transmission system.

The technical values may be used for immediate failure diagnosis or for scheduling of maintenance work. It may also be used during initialization of the system for adjusting the operating range of the torque limiter and avowing it to limit the torque at a specific value.

### Brief description of the drawings

Fig. 1 is a section view of a torque limiting assembly according to the present invention.
Fig. 2 is an exploded view of a torque limiting assembly according to the present invention.
Figs 3a and 3b are schematic views illustrating the working principle of a adjustable Torque limiting assembly according to the present invention.
Fig. 4 shows a perspective view of an alternative embodiment of a torque limiting assembly 10' according to the present invention.
Fig. 5a and 5b show side views of the torque limiting assembly in which the torque adjustment screws have been fastened loosely and tightly, respectively.
Fig. 6 is a perspective view of yet an alternative view of a torque limiting assembly 10' according to the present invention.
Fig. 7 is a perspective view of yet further an alternative view of a torque limiting assembly 10' according to the present invention.
Fig. 8 is a schematic perspective view of a slip measurement assembly according to the present invention.
Fig. 9 are perspective views of alternative embodiments of the rotation sensor.
Fig. 10 is a perspective view of a slip measurement assembly mounted on a torque limiter assembly.
Fig. 11 is a schematic view of a rotating mechanical power transmission system according to the present invention.

### Detailed description of the drawings

Fig, 1 shows an adjustable torque limiting assembly according to a preferred embodiment of the present invention in particular suitable for a wind power plant, and which is as a whole being designated the reference numeral 10. The torque limiting assembly 10 may be used for transferring and limiting the torque from a torque generating device such as an engine, a turbine, a wind mill or a water mill to a torque receiving device such as an electrical generator or various kinds of driving arrangements such as a ship's screw or tools such as drills.

The torque limiting assembly 10 comprises an axially symmetrical torque input part 12 designed to accommodate a cylindrical torque supplying shaft 14, The torque input part 12 comprises four main parts, where the first part being a hub component 20. The hub component 20 defines a through-going central bore 16 having a shape corresponding to the outer surface 18 of the torque supplying shaft 14 to allow the torque supplying shaft 14 to enter and be accommodated in the through-going central bore with a thigh fit. The hub component 20 extends in an axial direction and is made of steel, thereby exhibiting some The hub 12 further comprises an outwardly extending flange 22 defining a first radial surface 18 and an opposite surface comprising a plurality of axially extending first plurality of screw threads 24 parallel to the through-going central bore 16 and an outer conical surfaces 32 tapering away from the outwardly extending flange 22. The hub component 20 further comprises an annular flange 23 extending in an axial direction and located between the throughgoing central bore 16 and the first radial surface 18. The annual flange 23 defines an end surface having a second plurality of screw threads 25 extending axially into the hub component 20 parallel to the through-going central bore 16.

The torque input part 12 further comprises an axially symmetrical locking ring 26 to be positioned outside of the hub component 20. The locking ring 26 comprises a first multitude of through-going holes 28 corresponding in number and position to the axial threads 24 of the hub 12. The locking ring 26 further comprises an inner conical surface 34 having an area and a tapering angle corresponding to the outer conical surface 32 of the hub 12. To assemble the locking ring 26 onto the hub component 20 after the torque supplying shaft 14 has been inserted into the through-going ventral bore 16, the inner conical surface 34 of the locking ring 26 is slid onto the outer conical surface 32 of the hub component to position the through-going holes 28 in registration and alignment with the first plurality of screw threads 24. Thereafter, torque shaft installation screws 30 are inserted into through-going holes 28 and fastened to the first plurality of screw threads 24 for fastening the locking ring 26 in relation to the hub 12. The inner and outer conical surfaces 34 32 are being slidably cooperating thereby allowing the hub component 20 to be bent inwardly upon tightening of the screws 30 for clamping the torque supplying shaft 14 tightly to the hub component 20.

The torque limiting assembly 10 further comprises a torque output part 35. The torque output part 35 defines a first annular disc 36 which defines a first side 40 and an opposite second side 42. The first side 40 of the first annular disc 36 comprises a first friction disc 44 and the second side 42 of the first annular disc 36 comprises a second friction disc 46. The first annular disc 36 defines a first central aperture 47 having a diameter being substantial larger than the torque supplying shaft 14 and slightly larger than the maximum diameter defined by the annular flange 23. When the first annular disc 36 is being mounted onto the hub component 20, the first friction disc 44 of the first side 40 of the annular disc 36 is abutting the first radial surface 18 of the hub component 20 and the annular flange 23 of the hub component 20 is extending into the first central aperture 47 by a tight clearance. The torque output part 35 is further provided with four outwardly extending Ranges 38, which are provided with screw holes 40 for connection to the momentum receiving device (not shown).

The torque input part 12 further comprises a second disc 48 defining a second radial surface 50 and an opposite third radial surface 52. The second annular disc 48 further comprises a second central aperture 54 having a diameter being slightly larger than the diameter of the torque supplying shaft 14 and a second plurality of through-going holes 56 corresponding in number and position to the second plurality of screw threads 25 of the annular flange 23. The second radial surface 50 of the second annular disc 48 is being mounted abutting the second friction disc 46 of the second side 42 of the first annular disc and the second plurality of through-going holes 56 are positioned in registration and alignment with the second plurality of screw threads 25 of the annular flange 23. The torque input part 12 further comprises an annular spring washer 50 constituting a combined spring washer and fixation ring. The spring washer 50 comprises an inner fixation ring 60 comprising a third plurality of through-going holes 62 corresponding in number and position to the second plurality of screw threads 25 of the annular flange 23. The spring washer 50 further comprises an outwardly and axially protruding flexible spring member 64. The spring washer 50 is positioned outside the third radial surface 52 of the second annular disc 48 and the third plurality of through-going holes 62 are positioned in registration and alignment with the second plurality of through-going holes 56. The spring member 64 thereby contacts the third radial surface 52 of the second annular disc 48, while a gap is formed between the fixation ring 60 and the third radial surface 52 of the second annular disc 48. To mount the torque limiting assembly 10 together, a plurality of torque adjustment screws 66 are inserted through the second and third plurality of through-going holes 56 and 62 and are fastened by the second plurality of screw threads 25 of the annular flange 23 of the hub component 20.

The torque which can be transmitted between the torque input part 12 and the torque output part 35 is now limited by the friction force between the first radial surface 18 of the hub component 20 and the first side 40 of the first annular disc 36 or the friction force between the second radial surface 50 of the hub components 48 and the first side 40 of the annular disc 36. By tightening the torque adjustments screws 66, the spring member 64 will apply an increasing spring force onto the second annular disc 48, thereby establishing an increasing friction force between the first radial surface 18 of the hub component 20 and the first side 40 of the first annular disc 36, and, between the second radial surface 50 of the hub component 48 and the first side 40 of the first annular disc 36, as the friction force is proportional to the spring force. The second annualr disc will distribute the spring force evenly over the second radial surface 50. The spring force, and thereby the friction force, may be decreased by loosening the torque adjustment screws 66. The friction force is also depending on the friction coefficient of the materials used, and in particular by the first and second friction discs 44 and 46, respectively In case the torque to be transferred exceeds the amount, which can be transferred by the friction force between the first radial surface 18 of the hub component 20 and the first side 40 of the first annular disc 36, or, between the second radial surface 50 of the hub component 48 and the first side 40 of the first annular disc 36, the torque output part 35 will slip in relation to the hub component 12. The friction force may be calculated according to the formula below.
F_{f}=cons*Fₛ
Where F_{f}= is the friction force, const is the friction coefficient and Fₛ is the spring force.

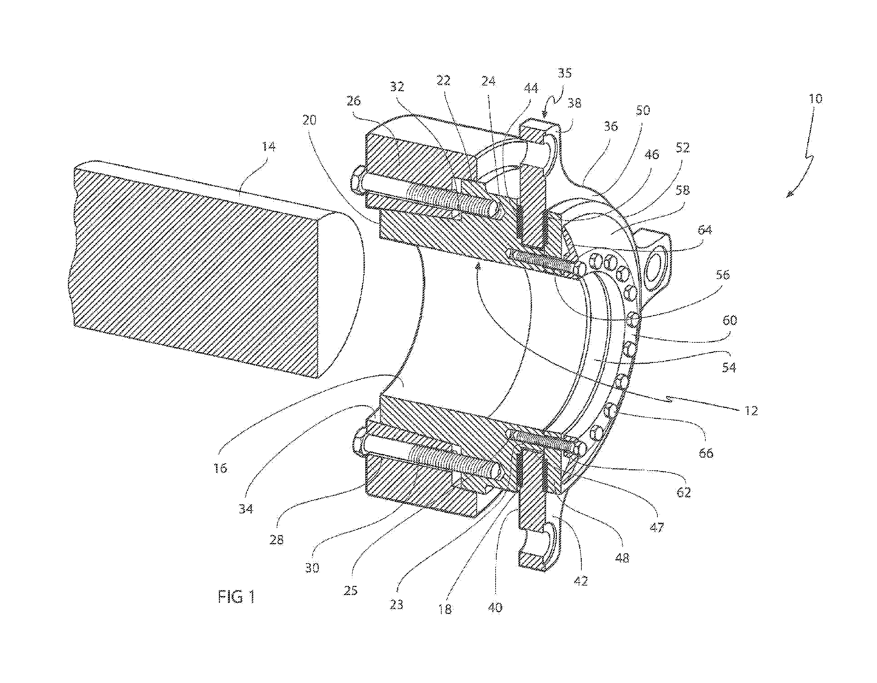

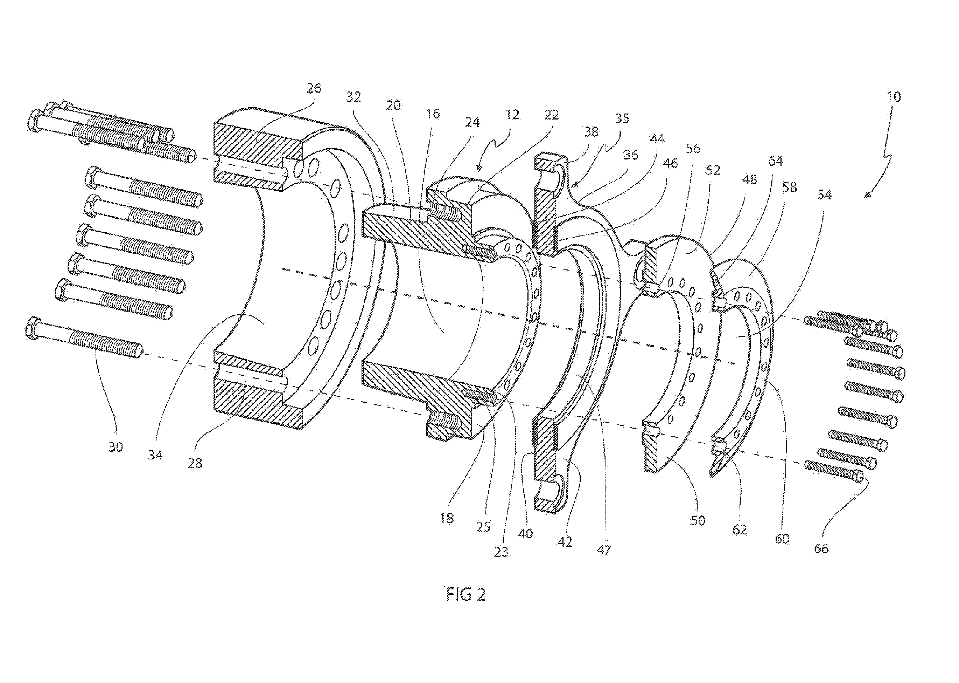

Fig. 2 shows an exploded view of the torque limiting assembly 10 as shown in Fig. 1, The preferred embodiment according to the present invention may be assembled and adjusted on site in a very convenient manner. The torque limiting assembly 10 may for instance be assembled according to the below method. As a first step, the torque supplying shaft (not shown here, designated 14 in fig 1) is inserted into the through-going central bore 16. The inner of the central hub 20 should fit by a tight clearance around the drive shaft 18. In a second step, the locking ring 26 is applied and slipped onto the outer conical surface 32 of the hub component 20. The outer conical surface 32 of the hub component 20 forms a tapered surface. The inner conical surface 34 of the locking ring 26 forms a corresponding tapered surface. By inserting the torque shaft installation screws 30 through the first multitude of through -going holes 28 of the locking ring 26 and into the first plurality of screw threads 24 and by tightening the screws 30, the tapered surface of the inner conical surface 34 of the locking ring 26 will subject the hub component 20 to an inwardly directed force due to the tapered shape of the inner conical surface 34 and the corresponding tapered shape of the outer conical surface 32. By bending the hub component 20 slightly inwards, the torque supplying shaft (not shown) will be clamped into a fixated position in relation to the hub 12, and will be held in place by the friction force, which is understood to be larger than the friction force between the torque input part 12 and the torque output part 35. The screws 30 should be tightened sufficient for preventing any unintentional slip between the torque supplying shaft (not shown) and the hub component 20. It should be noticed that the torque shaft installation screws 30 are inserted in an axial direction making them easily accessible from the outside. The torque shaft installation screws 30 will not be obscured by any other part of the torque supping shaft 14 or the assembly 10. Thus, any assembly, adjustment or disassembly of the locking ring 26 can be performed easily at any time.

The first annular disc 36 is applied onto the hub component 20 from the opposite side of the locking ring 26 for contacting the first radial surface 18 of the hub component 20. The annular flange 23 of the hub component 20 is surrounded by the first annular disc 36 and acting as a hub in relation to the first annular disc. The diameter of the first central aperture 47 of the first annular disc should be only slightly larger than the maximum diameter of the annular flange 23 of the hub component 20 in order for the first annular disc 36 to be able to rotate to the hub component 20. The first and second friction discs 44 and 46 are preferably attached to the first and second surfaces 40, 42, respectively, of the first annular disc 36, for establishing juxtaposing friction surfaces between the first radial surface 18 and the first friction disc 44, and, further juxtaposing friction surfaces between the second radial surface 50 and the second friction disc 46. Alternatively, the friction discs 44 and 46 may also be separate components, thereby establishing four juxtaposed friction surfaces, i.e. between the first radial surface 18 and the first friction disc 44, between the first friction disc 44 and the first side 40, between the second side 42 and the second friction disc 46 and between the second friction disc 46 and the second radial surface. The second annular disc 48 and the spring washer 50 are positioned onto the second friction disc 46, applying the second and third plurality of through-going holes 56 62 in registration and alignment with the second plurality of screw threads 25. The torque adjustment screws 66 are inserted into the second and third plurality of through-going holes 56 62 into the second plurality of screw threads 25. By tightening the torque adjustment screws 66. the amount of friction between the first annular disc 36 and the hub component 12 is increases and thereby, the maximum amount of torque which may be transferred from the hub component 20 to the first annular disc 36 increases. Consequent, by loosening the torque adjustment screws 66, the force applied by the spring washer 50 decreases, thereby allowing less torque to be transferred from the hub component 12 to the first annular disc 36,

The whole assembly 10 is preferably made of steel. For the first and second friction discs 44 and 46, different kinds of steel may be used for achieving different frictions coefficients between the firs annular disc 36 and the second annular disc 48, and, between the first annular disc 36 and the hub component 20. Preferably, a material having a high thermal conductivity is used for both the friction discs 44 and 46. The benefit of using dual juxtaposed friction surfaces is that in case one of the friction discs 44, 46 have been deteriorated by e.g. lubricants such as fats and/or oils used for lubricating the drive shaft (not shown), the other friction disc may still be able to operate normally. Thereby, a longer service life of the torque limiting assembly may be achieved.

During normal operation, the hub component 20, the second annular disc 48 and the first annular disc 36 are all rotating synchronously. This is the situation during normal operation when a suitable amount of torque is being transferred from the torque input part 12 to the torque output part 35. In case of a failure, such as a short circuit generator or a drive shaft being the torque will increase dramatical A dramatic increase of torque will in most cases cause a breakdown and severe damage to the equipment, unless a torque limiting assembly is employed. To avoid damage, the first annular disc 36 will slip in relation to the hub component 20 and the second annular disc when a specified torque value has been overrun. The first annular disc 36 will then rotate in relation to the hub component 20 and the second annular disc 48 and thereby the equipment must not be to sustain the excessive torque which would otherwise be applied. It should be noted that the hub component 20 and the second annular disc 48 are fixed together by the torque adjustment screws 66 and therefore always rotate synchronous.

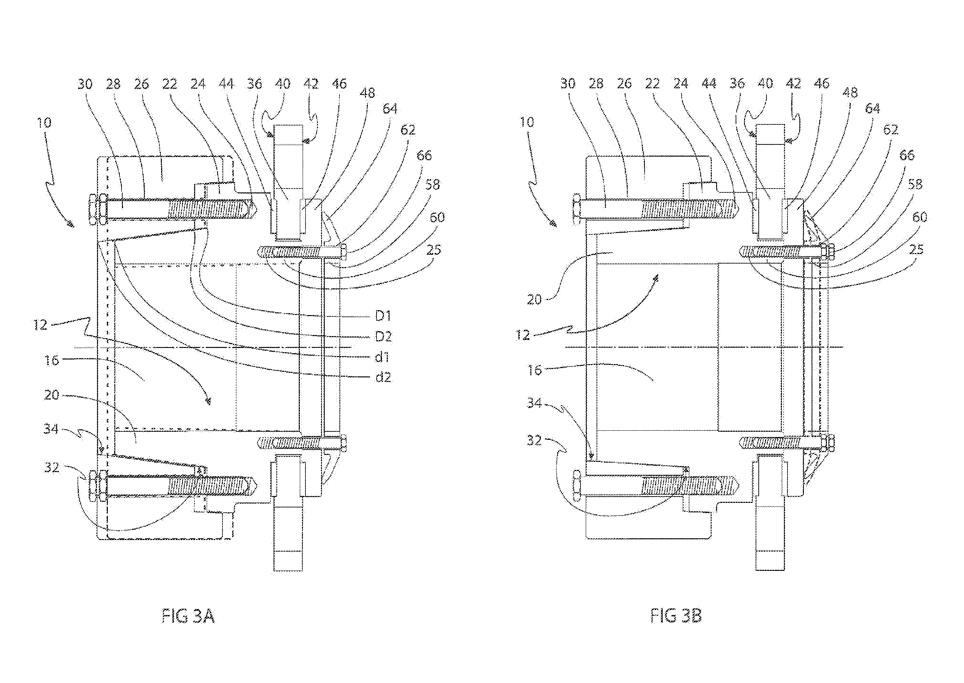

Fig. 3a shows a schematic view of the tightening of the torque shaft installation screws 30. It can be seen that the maximum diameter D1 of the inner conical surface 34 is slightly larger than the maximum diameter D2 of the outer conical surface 32, and that the minimum diameter d1 of the inner conical surface 34 is slightly larger than the minimum diameter d2 of the outer conical surface 32. By tightening the torque shaft installation screws 30, the outer conical surface 32 will apply an inwardly directed force to the inner conical surface 34 of the hub component and constrict the through-going central bore 16 by bending the hub component 20 slightly inward. This will cause the hub component 20 to be securely fastened onto the outer surface of the torque supply shaft. The filled lines represent the non-tightened state whereas the dashed lines represent the tightened state, The inwardly bending of the hub component 20 preferably is in the sub mm range.

Fig. 3b shows a schematic view of the tightening of the torque adjustment screws 66 into the second plurality of screw threads 25, By tightening the torque adjustment screws 66, the fixation ring 60 of the spring washer 50 will be moved in a direction towards the third radial surface 52 of the second annular disc 48. The flexible flange 54 of the spring washer 50 will thereby apply an increasing spring force against the second annular disc 48, which cause the first annular disc 36 to be damped between the second annular disc 48 and the hub component 20. The friction force and thereby the torque between the torque input part 12 and the torque output part is determined by the friction coefficient of the material used for the friction discs 44 and 46 and by the force applied by the spring washer 50 onto the circular plate 48, The transmittable torque may therefore be adjusted any time by tightening or loosening the torque adjustment screws 66 and/or exchanging the first and/or second friction discs 44 46. The torque adjustment screws 56 are inserted in an opposite direction in relation to the torque shaft installation screws 30 and are always easily accessible for adjustment from the outside. The torque screws 56 are as well as the torque shaft installation screws 30 accessible at any time and will never be obscured by any other parts of the torque timing assembly 10. The filled lines represent the non-tightened state whereas the dashed lines represent the tightened state.

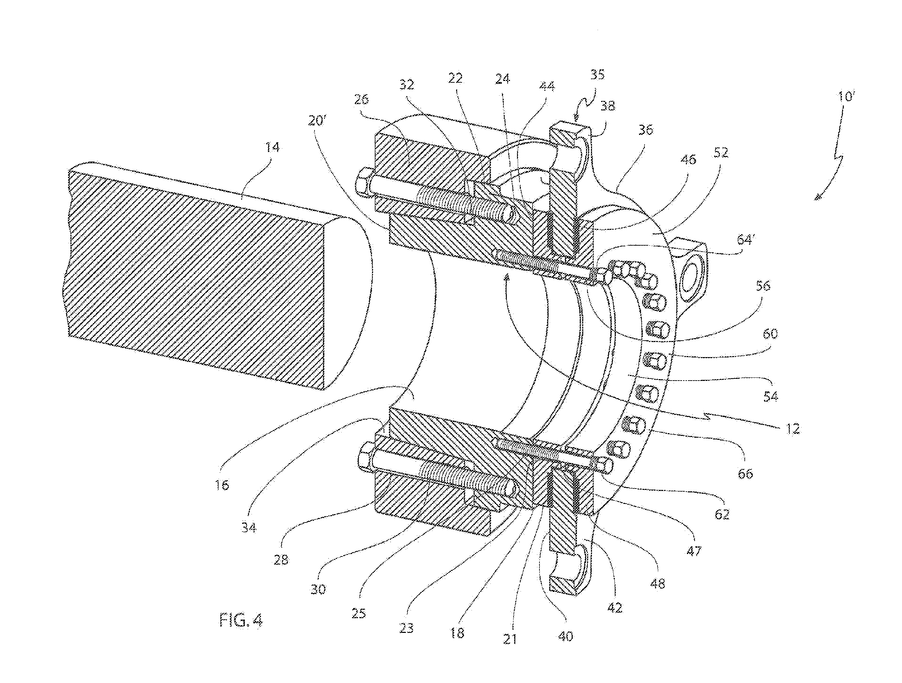

Fig. 4 shows a perspective view of an alternative embodiment of a torque limiting assembly 10' according to the present invention. The torque limiting assembly 10' shares all features of the previously presented torque limiting assembly 10, except that the hub component 20 of the torque input part 12 has been divided into a hub component proper 20' and a third annular disc 21. The third annular disc 21 comprises the first radial surface 18 located between the first friction disc 44 and the hub component proper 20'. The third annular disc 21 is located at the opposite side of the first surface 18 and is fastened to the hub component proper 20' via the second plurality of screw threads 25', which penetrated the third annular disc 21 and enters the hub component proper 20' for receiving the torque adjustment screws 66', which in the present embodiment has been made slightly longer. This the first radial surface 18 to be removed and serviced without removing the hub component proper 20' from the shaft 14.

Further, the present embodiment includes spring members 64' between each of the heads of the torque adjustment screws 66 and the second annular disc 48. Thus, the fixation ring 60 and the adjoined spring member 64 of the previous embodiment has been omitted. The spring members 64' constitute disc springs which are individually mounted on each of the torque adjustments screws 66. This allows individual adjustment of each disc spring,

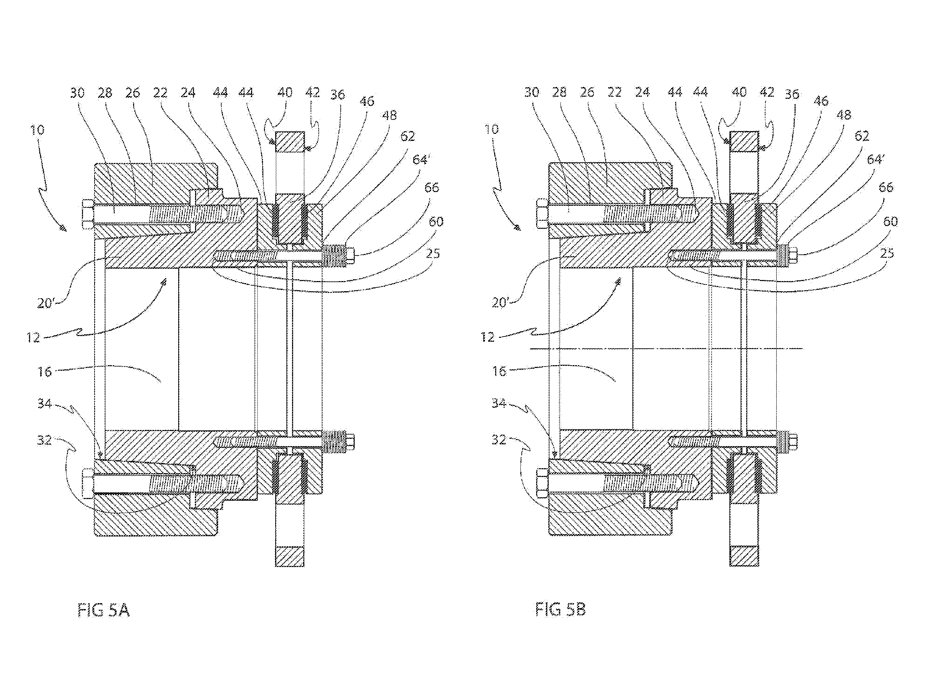

Fig. 5a shows a side view of the torque limiting assembly 10' in which the torque adjustment screws 66 have been fastened loosely. This yields a high force between the friction discs 44, 46, which results in a low friction between the torque input part 12 and the torque output part 35. The low friction will cause the torque limiting assembly 10' to allow the torque input part 12 to slip in relation to output part 35 at low torque values.

Fig. 5b shows a side view of the torque limiting assembly 10', in which the torque adjustment screws 66 have been fastened tightly. This yields a high force between the friction discs 44, 46. which results in a high friction between the torque input part 12 and the torque output part 35. The high friction will cause the torque limiting assembly 10' to prevent slipping between the torque input part 12 and the torque output part 35 at low torque values, while the torque input part 12 is allowed to slip in relation to output part 35 at high torque values,

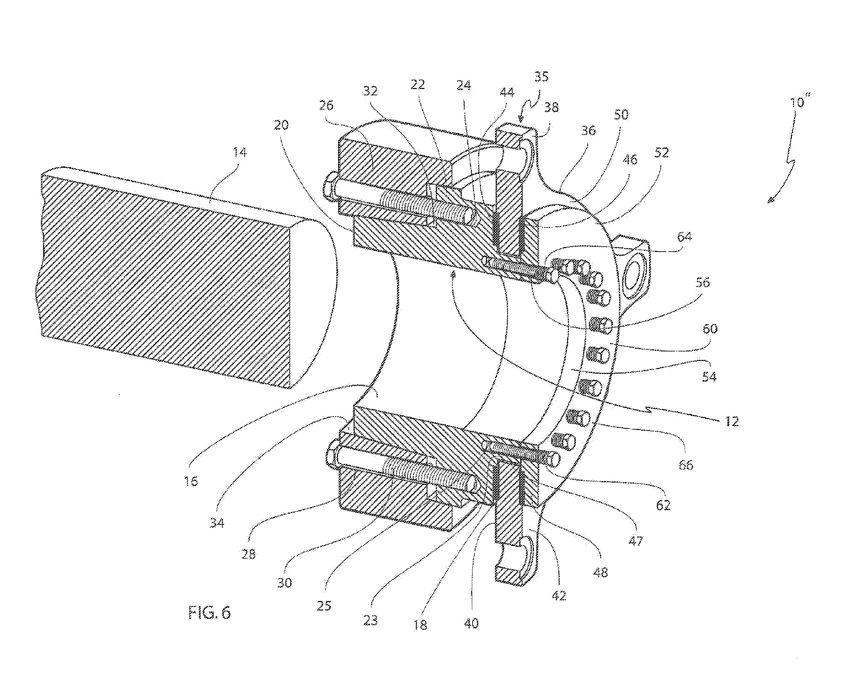

Fig. 6 shows a perspective view of an alternative embodiment of a torque limiting assembly 10" according to the present invention. The torque limiting assembly 10" shares all features of the previously presented torque limiting assembly 10, including the unitary hub component 20 of fig 1. However, the torque limiting assembly 10" includes the spring members 64' between each of the heads of the torque adjustment screws 66 and the second annular disc 48 of fig 4.

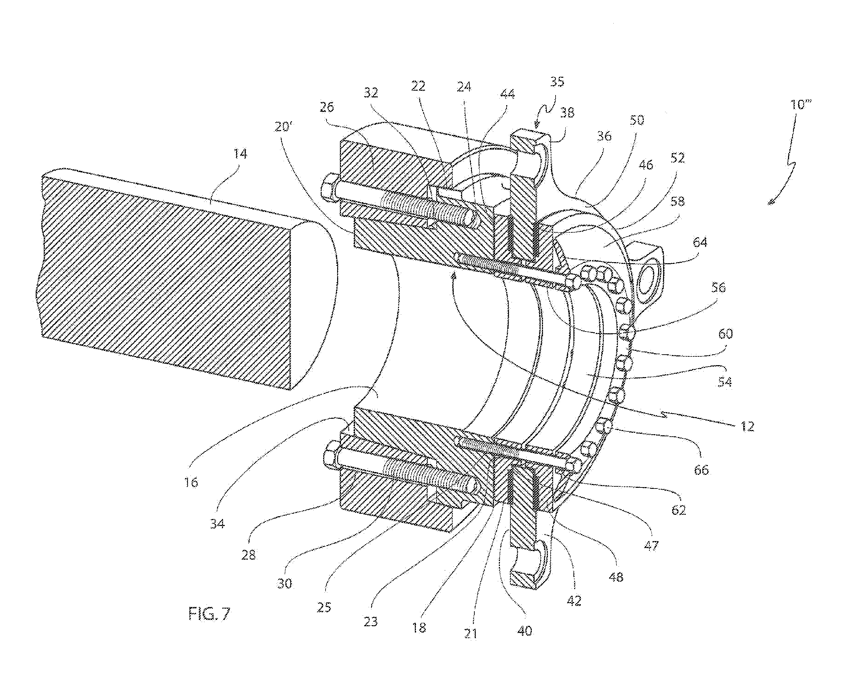

Fig. 7 shows a perspective view of yet an alternative, embodiment of a torque limiting assembly 10'" according to the present invention. The torque limiting assembly 10"' shares all features of the previously presented torque limiting assembly 10, except that the hub component 20 of the torque input part 12 has been divided into a hub component proper 20' and a third annular disc 21 similar to, the embodiment of fig 4. However, the torque limiting assembly 10" does not include the spring members of figs 4 and 6, but instead includes the annular spring washer 50 of fig 1 constituting a combined spring washer and fixation ring.

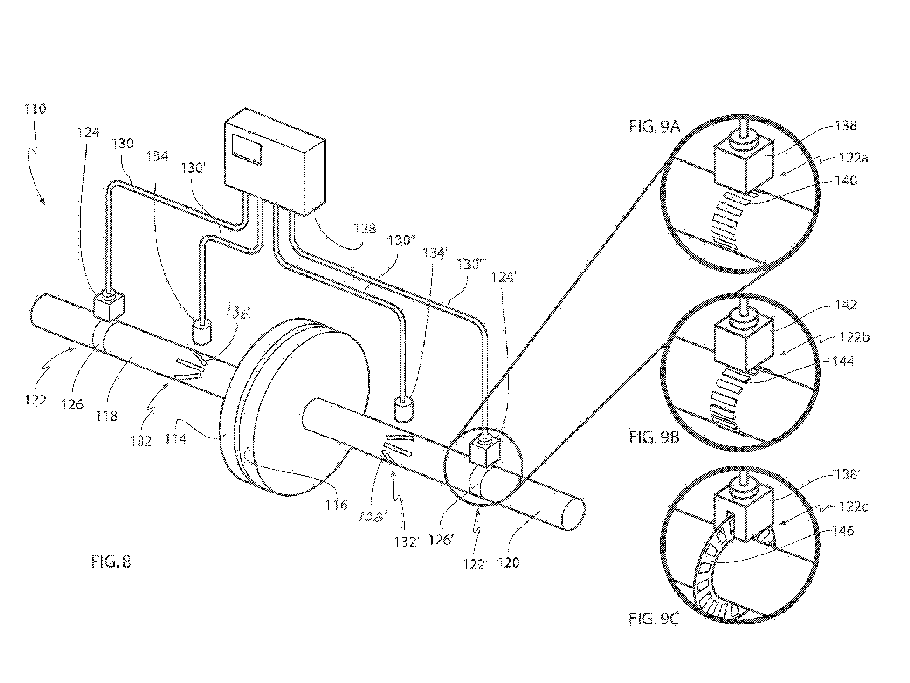

Fig. 8 shows a schematic perspective view of a torque assembly 110. The torque measurement assembly 110 is mounted on a torque limiter assembly 112. The torque limiter assembly 112 comprise a first and a second opposing discs designated the reference numerals 114 and 116. respectively. The first disc 114 is applying a friction force onto the second disc 116. The first disc 114 is connected loan input shaft 118 directed away from the second disc 116 The second disc is accordingly connected to an output shaft 120 directed away from the first disc 114. The input and output shafts 118, 120 are constituted by rigid and rotatable axles, The input shaft 118 may be connected to a torque generating appliance such as an engine, a wind turbine, a water turbine or a steam turbine. The output shaft 120 may be connected to a torque receiving appliance such as an electrical generator, a tool or hydraulic pump, or the like.

The torque measurement assembly 110 comprises a first rotation sensors 122 comprising an impulse generator 126 mounted on and rotating with the input shaft 118 and an impulse receiver 124 located outside the impulse generator and fixated in relation to the shaft. The first rotation sensor is configurated to generate an impulse each time the impulse generator 126 passes the impulse receiver 124. The impulse is sent to and stored in a processing unit 128 via cables 130. One impulse may correspond to a specific annular movement of the shaft, such as 10 degrees, 30 degrees, 90 degrees etc, depending on the number of impulse generators 126 and impulse receives 124 used. The output shaft 120 comprises a second rotation sensor 122', which is essentially identical to the first rotation sensor 122. The details of posssible embodiments of the first and second rotation sensors 122, 122' are presented in connection with Fig. 7a-c.

The input shaft 118 further comprises a torque sensor 132 comprising a strain gauge 136 mounted and rotating with the input shaft and a wireless receiver 134 mounted outside the input shaft 118. The wireless receiver 134 receives a signal representing the instantaneous torque applied to the input shaft 118. The input shaft 136 may comprise more than one strain gauge in order to achieve redundancy and to be able to accurately measure torque in different directions. The strain sensor typically comprises an electrical conductor which is elongated or compressed in response to increased torque, causing the resistance in the conductor to vary. The strain sensor may be powered by batteries, by a brush or by the shaft. The output shaft 120 comprises a second torque sensor 132', which is essentially identical to the first torque sensor 132. In alternative embodiments, the first torque sensor 132 or the second torque sensors 132' may be omitted.

In the processing unit, the signals representing the impulses generated by the first and second rotation sensors 124, 124' and the representing the instantaneous torque on the input shaft 118 and output shaft 120 are registered. The signals are used for calculating values representing the rotational speed and the torque of the input and output shafts 118 120, respectively, the relative rotational speed between the input and output shafts 118 120 and optionally, the relative torque between the input and output shafts 118 120 by the processing unit 128. These values are stored in the processing unit 128 and/or communicated to a user via GSM, internet or the like. Further other values such as the accumulated angular difference between the input and output shafts 118 120 may be derived by the proceeding unit 128,

Fig, 9 shows perspective views of alternative embodiments of the rotation sensor 122 which may be mounted at both the first and the second shaft 118, 120,

Fig. 9A shows a perspective view of an optical impulse generator 126a comprising a combined light sensor and light source 138, The combined tight sensor and light source 138 is aimed towards reflective strips 140 located on and rotating with the shaft 118, 120. Each time a reflective strip 140 is passing below the combined light sensor and light source 138, the light emitted by the combined light sensor and light source 138 will reflect on the reflective strip 140 an be detected by the combined light sensor and light source 138 which will generate an impulse signal. The parts of the shaft outside the reflective strip 140 may be painted black to absorb light.

Fig. 9B shows a perspective view of a magnetic impulse generator 122b comprising a coil 142 and permanent magnets 144 located on the shaft Each time a magnet 144 passes the coil 142, a current impulse signal will be induced into the coil 142.

Fig. 9C shows Fig. 9A shows a perspective view of an optical impulse generator 126c comprising a combined light sensor and source 138' and a hole plate 146. The hole plate 146 constitutes a disc rotating synchronously with the shaft. The disc comprise annular holes. The combined tight sensor and light source 138' comprise a light source and a light sensor, located on opposite sides of the hole plate 146. Each time a hole is located between the light source and the light sensor an impulse is generated.

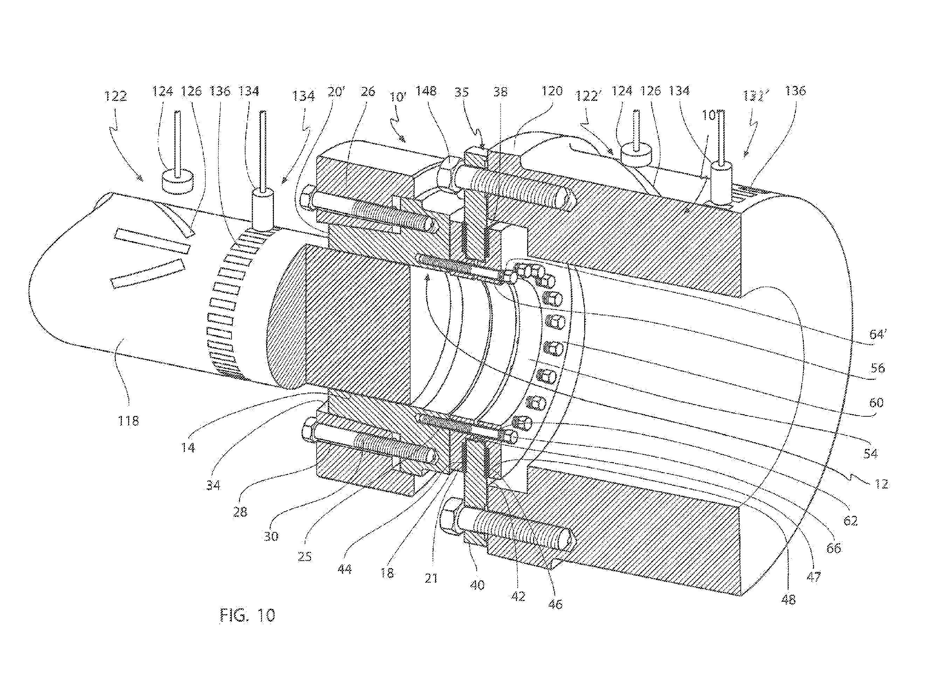

Fig. 10 shows a perspective view of the slip measurement assembly of Fig. 8 mounted on the torque limiter assembly of Fig. 4. In the present embodiment, the input shaft 118 constitutes the torque supplying shaft designated the reference numeral 14 in Fig. 4. The output shaft 120 constitutes a hollow shaft which is mounted on the torque output part 35 of the torque limiter assembly of Fig. 4 by means of bolts 148.

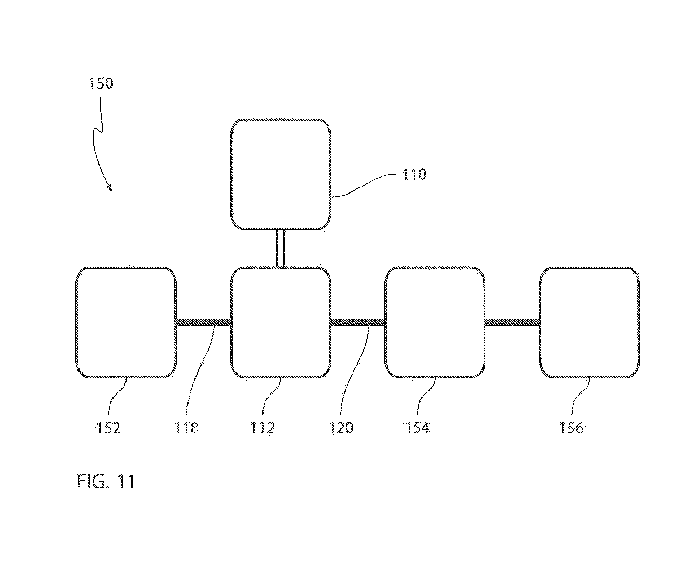

Fig. 11 shows a schematic view of a rotating mechanical power transmission system 150 according to the present invention. The rotating power transmission system 150 comprise a torque generating device 152 such as an engine, wind turbine, stream, turbine, water turbine or the like. The torque generating device 152 is coupled to the input shaft 118 of a torque limiter assembly 112. The output shaft 120 of the torque limiter assembly 112 is connected to an electrical generator 156 via a gearbox 154. The slip measurement assembly 110 is connected to the torque limiter assembly 112. The gearbox 154 is protected by the torque limiter assembly 112 in case of a sudden increase in torque on any side of the slip measurement assembly 110. The operation of the torque limiter assembly 112 is monitored by the slip measurement assembly 110.

Although the present invention has been described above with reference to a specific embodiment of the torque limiter assembly, it is of course contemplated that numerous modifications may be deduced by a person skilled in the art, and modification readily perceivable by a person having ordinary skill in the art is consequently to be construed part of the present invention as defined in the appending claims.

Although the slip measurement assembly according to the present invention is primarily to be used in high torque appliances such as power plants and the like, it is to be understood that the slip measurement assembly according to the present invention may be used together with other appliances such as in trucks, cars, tools, industrial machines and other medium or low torque appliances.

### List of parts with reference to the figures

| | |
|---|---|
| 10 Torque limiter assembly | 58. Spring washer |
| 12. Torque input part | 60. Fixation ring |
| 14. Torque supplying shaft | 62. Third plurality of through-going holes |
| 16. Through-going central bore | 64. Spring member |
| 18 First radial surface | 66 Torque adjustment screws |
| 20 Hub component | 110. Slip measurement assembly |
| 21 Third annular disc | 112 Torque limiter assembly |
| 22. Outwardly extending flange | 114. First disc |
| 23 Annular flange | 116. Second disc |
| 24. First plurality of screw threads | 118. Input shaft |
| 25 Second plurality of screw threads. | 120 Output shaft |
| 26. Locking ring | 122. Rotation sensor |
| 28 First multitude of through-going holes | 124. Impulse receiver |
| 30 Torque shaft installation screws | 126. Impulse generator |
| 32. Outer conical surface | 128. Processing unit |
| 34 Inner conical surface | 130. Cable |
| 35 Torque output, part | 132. Torque sensor |
| 36 First annular disc | 134. Wireless receiver |
| 38. Mounting flange | 136 Strain gauge |
| 40. First side | 138. Combined light source and light sensor |
| 42. Second side | 140. Reflective strip |
| 44 First friction disc | 142. Coil |
| 46. Second friction disc | 144 Magnet |
| 47. First central aperture | 146 Hole plate |
| 48. Second annular disc | 148. bolt |
| 50. Second radial surface | 150. Rotating mech power transm. system |
| 52. Third radial surface | 152. Torque generator |
| 54. Second central aperture | 154. Gearbox |
| 56. Second plurality of through-going holes | 156. Electrical generator |

### POINTS RELATING TO THE TORQUE LIMITING ASSEMBLY:

1. A torque limiting assembly comprising:
   a torque input part for coaxial connection to a rotational motion torque supplying shaft
      and
   a torque output part for connection to a rotational motion torque receiving appliance and for coaxial mounting in relation to said torque input part, said torque output part being configured as a torque limiting first annular disc having opposite first and second sides including a first and a second specific torque defining friction surface, respectively, said torque limiting first annular disc defining a first central aperture having a diameter substantially larger than the diameter of said torque supplying shaft,
   said torque input part four components being:
      a hub component defining a through-going cylindrical bore defining a tight fit clearance with said torque supplying shaft, said hub component further defining a first radial surface including a third specific friction surface for contacting said first specific torque defining friction surface of said torque limiting first annular disc, said hub component further defining a reception surface opposite said first radial surface, said hub component further defining an outer conical surface tapering away from said first radial surface and defining a first maximum diameter juxtaposed said first radial surface and a first diameter opposite said first radial surface, said hub component further having an annular flange located within said first central aperture when said third specific friction surface is contacting said first specific friction surface, said annular flange defining an exposed annular end face, said hub component further induding a first plurality of screw threads extending from said reception surface into said hub component and being parallel to said through-going cylindrical bore, and a second plurality of screw threads extending from said annular end face into said annular flange and being parallel to said through going cylindrical bore,
      a conical locking ring defining an inner conical surface for cooperating with said outer conical surface of said hub component when said conical locking ring is mounted on said hub component, said inner conical surface defining a second minimum diameter larger than the diameter of said through-going cylindrical bore of said hub component and a second maximum diameter slightly smaller than said first maximum diameter and substantially larger than said first minimum diameter for providing a substantial contact surface between said inner conical surface and said outer conical surface when said conical locking ring is mounted on said hub component, said locking ring further comprising a first multitude of through-going being in registration or alignment with said first plurality of screw threads when said conical locking ring is mounted on said hub component,
      a second annular disc defining a second central aperture having a diameter slightly larger than the diameter of said torque supplying shaft and having opposite second and third radial surfaces, said second radial surface including a fourth specific torque defining friction surface for contacting said second specific torque defining friction surface, said second annular disc further comprising a second multitude of through-going holes being in registration or alignment with said second plurality of screw threads when said second annular disc is mounted on said hub component, and
      a combined annular spring washer and fixation ring defining a third central aperture having a diameter slightly larger than the diameter of said torque supplying shaft and defining an inner fixation ring and an outer spring member, said inner fixation ring comprising a third multitude of through-going holes being in registration or alignment with said second multitude of through-going holes and said second plurality of screw threads when said inner fixation ring is mounted on said hub component, said outer spring member protruding outwardly from said inner fixation ring, said outer spring member being in contact with and applying a clamping force onto said third radial surface of said second annular disc to achieve a first friction force between said first and third specific torque defining friction surfaces and a second friction force between said second and fourth specific torque defining friction surfaces,
         said torque limiting assembly further comprising:
      a first set of screws mounted in said first multitude of through-going holes and fixated to said first plurality of screw threads, and
      a second set of screws mounted in said second and third multitudes of through going holes and fixated to said second plurality of screw threads.
2. A torque limiting assembly comprising:
   a torque input part for coaxial connection to a rotational motion torque supplying shaft
      and
   a torque output part for connection to a rotational motion torque receiving appliance and for coaxial mounting in relation to said torque input part, said torque output part being configured as a torque limiting first annular disc having opposite first and second sides including a first and a second specific torque defining friction surface, respectively, said torque limiting first annular disc defining a first central aperture having a diameter substantially larger than the diameter of said torque supplying shaft,
   said torque input part including four components being:
      a hub component defining a through-going cylindrical bore defining a tight fit clearance with said torque supplying shaft, said hub component further defining a first radial surface including a third specific friction surface for contacting said first specific torque defining friction surface of said torque limiting first annular disc, said hub component further defining a reception surface opposite said first radial surface, said hub component further defining an outer conical surface tapering away from said first radial surface and defining a first maximum diameter juxtaposed said first radial surface and a first minimum diameter opposite said first radial surface, said hub component further having an annular flange located within said first central aperture when said third specific friction surface is contacting said first specific friction surface, said annular flange defining an exposed annular end face, said hub component further including a first plurality of screw threads extending from said reception surface into said hub component and being parallel to said through-going cylindrical bore, and a second plurality of screw threads extending from said annular end face into said annular flange and being parallel to said through going cylindrical bore,
      a conical locking ring an inner conical surface for cooperating with said outer conical surface of said hub component when said conical locking ring is mounted on said hub component, said inner conical surface defining a second minimum diameter larger than the diameter of said through-going cylindrical bore of said hub component and a second maximum diameter slightly smaller than said first maximum diameter and substantially larger than said first minimum diameter for providing a substantial contact surface between said inner conical surface and said outer conical surface when said conical locking ring is mounted on said hub component, said locking ring further comprising a first multitude of through-going holes being in registration or alignment with said first plurality of screw threads when said conical locking ring is mounted on said hub component,
      a second annular disc defining a second central aperture having a diameter slightly larger than the diameter of said torque supplying shaft and having opposite second and third radial surfaces, said second radial surface including a fourth specific torque defining friction surface for contacting said second specific torque defining friction surface, said second annular disc further comprising a second multitude of through-going holes being in registration or alignment with said second plurality of screw threads when said second annular disc is mounted on said hub component, and
      a set of individual springs, said set defining a third central aperture having a diameter slightly larger than the diameter of said torque supplying shaft and each of said individual springs defining one of a third multitude of through-going holes being in registration or alignment with said second multitude of through-going holes and said second plurality of screw threads when each of said individual springs are mounted on said hub component, said springs being in contact with and applying a clamping force onto said third radial surface of said second annular disc to achieve said first friction force between said first and third specific torque defining friction surfaces and said second friction force between said second and fourth specific torque defining friction surfaces, said torque limiting assembly further comprising:
      a first set of screws mounted in said first multitude of through-going holes and fixated to said first plurality of screw threads, and
      a second set of screws mounted in said second and third multitudes of through going holes and fixated to said second plurality of screw threads.
3. The torque limiting assembly according to point 2, wherein said springs are disc springs.
4. A torque limiting assembly comprising:
   a torque input part for connection low rotational motion torque supplying shaft
      and
   a torque output part for connection to a rotational motion torque receiving appliance and for coaxial mounting in relation to said torque input part, said torque output part being configured as a torque limiting first annular disc having opposite first and second sides including a first and a second specific torque defining friction surface, respectively, said torque limiting first annular disc defining a first aperture having a diameter substantially larger than the diameter of said torque supplying shaft,
   said torque input part including four components being:
      a hub component defining a through-going cylindrical bore defining a tight fit clearance with said torque supplying shaft, said hub component further defining a first radial surface including a third specific friction surface for contacting said first specific torque defining friction surface of said torque limiting first annular disc, said hub component further defining a reception surface opposite said first radial surface, said hub component further defining an outer conical surface tapering away from said first radial surface and defining a first maximum diameter juxtaposed said first radial surface and a first minimum diameter opposite said first radial surface, said hub component further having an annular flange located within said first central aperture when said third specific friction surface is contacting said first specific friction surface, said annular flange defining an exposed annular end face, said hub component further including a first plurality of screw threads extending from said reception surface said hub component and being parallel to said through-going cylindrical bore, and a second plurality of screw threads extending from said annular end face into said annular flange and being parallel to said through going cylindrical bore,
      a conical locking ring defining an inner conical surface for cooperating with said outer conical surface of said hub component when said conical locking ring is mounted on said hub component, said inner conical surface defining a second minimum diameter larger than the diameter of said through-going cylindrical bore of said hub component and a second maximum diameter slightly smaller than said first maximum diameter and substantially larger than said first minimum diameter for providing a substantial contact surface between said inner conical surface and said outer conical surface when said conical locking ring is mounted on said hub component, said locking ring further comprising a first multitude of through-going holes being in registration or alignment with said first plurality of screw threads when said conical locking ring is mounted on said hub component,
      a second annular disc defining a second central aperture having a diameter slightly larger than the diameter of said torque supplying shaft and having opposite second and third radial surfaces, said second radial surface including a fourth specific torque defining friction surface for contacting said second specific torque defining friction surface, said second annular disc further comprising a second multitude of through-going holes being in registration or alignment with said second plurality of screw threads when said second annular disc is mounted on said hub component, and
      a fixation device defining a third multitude of through-going holes being in registration or alignment with said second multitude of through-going holes and said second plurality of screw threads when said fixation device is mounted on said hub component, said fixation device being in contact with and applying a clamping force onto said third radial surface of said second annular disc to achieve a first friction force between said first and third specific torque defining friction surfaces and a second friction force between said second and fourth specific torque defining friction surfaces, said torque limiting assembly further comprising:
         a first set of screws mounted in said first multitude of through-going holes and fixated to said first plurality of screw threads, and
         a second set of screws mounted in said second and third multiludes of through going holes and fixated to said plurality of screw threads.
5. The torque limiting assembly according to any of the points 1-4, wherein said hub component comprises a hub component proper including said through-going cylindrical bore, and, a third angular disc including said first radial surface, said hub component and said third angular disc being fixated by said second set of screws.
6. The torque limiting assembly according to point 5, wherein said hub component proper defines said second plurality of screw threads and said third annular disc defining a fourth plurality of screw threads in registration with said second pluralily of screw threads.
7. The torque limiting assembly according to any of the points 1-6, wherein said inner and outer conical surfaces define a tapering angle in relation to said cylindrical bore of between 0.1 degrees and 30 degrees, preferably between 3 degrees and 10 degrees and more preferably between 5 degrees and 7 degrees.
8. The torque limiting assembly according to any of the points 1-7, wherein said torque limiting assembly is made of steel.
9. The torque limiting assembly according to any of the points 1-8, wherein the friction coefficient between said first and third specific torque defining friction surfaces and between said second and fourth specific torque defining friction surfaces varies by 0%-100%, preferably by 10%-30%, more preferably by 20%-30%.
10. The torque limiting assembly according to any of the points 1-9, wherein the distance between said first maximum diameter and said second maximum diameter comprises 1-20 mm, preferably 2-10 mm and more preferably 4-5 mm.
11. The torque timing assembly according to any of the points 1 -10, wherein the distance between said first minimum diameter and said second minimum diameter comprises 1~20 mm, preferably 2-10 mm and more preferably 4-5 mm.
12. The torque limiting assembly according to any of the points 1-11, wherein the distance between said first maximum diameter and said first minimum diameter comprises 10-200 mm, preferably 20-100 mm and more preferable 40-50 mm.
13. The torque limiting assembly according to any of the points 1-12, wherein the distance between said second maximum diameter and said second minimum diameter comprises 10-200 mm, preferably 20-100 mm and more preferably 40-50 mm.
14. The torque limiting assembly according to any of the points 1-13, wherein said torque output part further comprises a number of mounting flanges with mounting holes for connection to said rotational motion torque receiving appliance, said number being 2-20, preferably 2-10, more preferably 4.
15. The torque limiting assembly according to any of the points 1-14, wherein said first set of screws amounts to 4-50 screws, preferably 10-30 screws, more preferably 18 screws.
16. The torque limiting assembly according to any of the points 1-15, wherein said second set of screws amounts to 4-50 screws, preferably 10-30 screws, more preferably 20 screws.
17. The torque limiting assembly according to any of the points 1-16, further including a first friction plate located between said First and third specific torque defining friction surface.
18. The torque limiting assembly according to any of the points 1-17, further deluding a second friction plate located between said second and fourth specific torque defining friction surface.
19. The torque limiting assembly according to any of the points 1-18 being incorporated in a water power plant or a wind power plant.
20. A method of limiting and adjusting torque between a rotational motion torque supplying shaft and a rotational motion torque receiving appliance by providing a torque limiting assembly comprising:
   a torque input part for coaxial connection to a rotational motion torque supplying shaft
      and
   a torque output part for connection to a rotational motion torque receiving appliance and for coaxial mounting in relation to said torque input part, said torque output part being configured as a torque limiting first annular disc having opposite first and second sides including a first and a second specific torque defining friction surface, respectively, said torque limiting first annular disc defining a first central aperture having a. diameter substantially larger than the diameter of said torque supplying shaft,
   said torque input part including four components being,
   a hub component defining a through-going cylindrical bore defining a tight fit clearance with said torque supplying shaft, said hub component further defining a first radial surface including a third specific friction surface for contacting said first specific torque defining friction surface of said torque limiting first annular disc, said hub component further defining a reception surface opposite said first radial surface, said hub component further defining an outer conical surface tapering away from said first radial surface and defining a first maximum diameter juxtaposed said first radial surface and a first minimum diameter opposite said first radial surface, said hub component further having an annular flange located within said first central aperture when said third specific friction surface is contacting said first specific friction surface, said annular flange defining an exposed annular end face, said hub component further including a first plurality of screw threads extending from said reception surface into said hub component and being parallel to said through-going cylindrical bore, and a second plurality of screw threads extending from said annular end face into said annular flange and being parallel to said through going cylindrical bore,
   a conical locking ring defining an inner conical surface for cooperating with said outer conical surface of said hub component when said conical locking ring is mounted on said hub component said inner conical surface defining a second minimum diameter larger than the diameter of said through-going cylindrical bore of said hub component and a second maximum diameter slightly smaller than said first maximum diameter and substantially larger than said first minimum diameter for providing a substantial contact surface between said inner conical surface and said outer conical surface when said conical locking ring is mounted on said hub component, said locking ring further comprising a first multitude of through-going holes being in registration or alignment with said first plurality of screw threads when said conical locking ring is mounted on said hub component,
   a second annular disc defining a second central having a diameter slightly larger than the diameter of said torque supplying shaft and having opposite second and third radial surfaces, said second radial surface including a fourth specific torque defining friction surface for contacting said second specific torque defining friction surface, said second annular disc further comprising a second multitude of through-going holes being in registration or alignment with said second plurality of screw threads when said second annular disc is mounted on said hub component, and
   a combined annular spring washer and fixation ring defining a third central aperture having a diameter slightly larger than the diameter of said torque supplying shaft and defining an inner fixation ring and an outer spring member, said inner fixation ring comprising a third multitude of through-going holes being in registration or alignment with said second multitude of through-going holes and said second plurality of screw threads when said inner fixation ring is mounted on said hub component, said outer spring member protruding outwardly from said inner fixation ring, said outer spring member being in contact with and applying a clamping force onto said third radial surface of said second annular disc to achieve a first friction force between said first and third specific torque defining friction surfaces and a second friction force between said second and fourth specific torque defining friction surfaces,
      said torque limiting assembly further comprising:
      a first set of screws mounted in said first multitude of through-going holes and fixated to said first plurality of screw threads, and
      a second set of screws mounted in said second and third multitudes of through going holes and fixated to said second plurality of screw threads,
         said method comprising the two main steps of:
         performing the sub-steps of: accommodating said torque supplying shaft inside of said through-going cylindrical bore of said hub component, subsequently accommodating said inner conical surface of said conical locking ring juxtaposed said outer conical surface of said hub component and subsequently lightening said first set of screws, and
         performing the sub-steps of: accommodating said first specific friction surface of said annular disc juxtaposed said third specific friction surface of said hub component, subsequently accommodating said fourth specific torque defining friction surface of said second annular disc juxtaposed said second specific torque defining friction surface of said hub component, subsequently accommodating said outer spring member of said combined annular spring washer and fixation ring juxtaposed said third radial surface of said second annular disc and subsequently tightening and adjusting said second set of screws.
21. A method of limiting and adjusting torque between a rotational motion torque supplying shaft and a rotational motion torque receiving appliance by providing a torque limiting assembly comprising:
   a torque input part for coaxial connection to a rotational motion torque supplying shaft
      and
   a torque output part for connection to a rotational motion torque receiving appliance and for coaxial mounting in relation to said torque input part, said torque output part being configured as a torque limiting first annular disc having opposite first and second sides including a first and a second specific torque defining friction surface, respectively, said torque limiting first annular disc defining a first central aperture having a diameter substantial larger than the diameter of said torque supplying shaft,
   said torque input part including four components being:
      a hub component defining a through-going cylindrical bore defining a tight fit clearance with said torque supplying shaft, said hub component further defining a first radial surface including a third specific friction surface for contacting said first specific torque defining friction surface of said torque limiting first annular disc, said hub component further defining a reception surface opposite said first radial surface, said hub component further defining an outer conical surface tapering away from said first radial surface and defining a first maximum diameter juxtaposed said first radial surface and a first minimum diameter opposite said first radial surface, said hub component further having an annular flange located within said first central aperture when said third specific function surface is contacting said first specific friction surface, said annular flange defining an exposed annular end face, said hub component further including a first plurality of screw threads extending from said reception surface into said hub component and being parallel to said through-going cylindrical bore, and a second plurality of screw threads extending from said annular end face into said annular flange and being parallel to said through going cylindrical bore,
      a conical locking ring defining an inner conical surface for cooperating with said outer conical surface of said hub component when said conical locking ring is mounted on said hub component, said inner conical surface defining a second minimum diameter larger than the diameter of said through-going cylindrical bore of said hub component and a second maximum diameter slightly smaller than said first maximum diameter and substantially larger than said first minimum diameter for providing a substantial contact surface between said inner conical surface and said outer conical surface when said conical locking ring is mounted on said hub component, said locking ring further comprising a first multitude of through-going holes being in registration or alignment with said first plurality of screw threads when said conical locking ring is mounted on said hub component,
      a second annular disc defining a second central aperture having a diameter slightly larger than the diameter of said torque supplying shaft and having opposite second and third radial surfaces, said second radial surface including a fourth specific torque defining friction surface for contacting said second specific torque defining friction surface, said second annular disc further comprising a second multitude of through-going holes being in registration or alignment with said second plurality of screw threads when said second annular disc is mounted on said hub component, and
      a set of individual springs, said set defining a third central aperture having a diameter slightly larger than the diameter of said torque supplying shaft and each of said individual springs defining one of a third multitude of through-going holes being in registration or alignment with said second multitude of through-going holes and said second plurality of screw threads when each of said individual springs are mounted on said hub component, said springs being in contact with and applying a clamping force onto said third radial surface of said second annular disc to achieve said first friction force between said first and third specific torque defining friction surfaces and said second friction force between said second and fourth specific torque defining friction surfaces,
         said torque limiting assembly further comprising:
         a first set of screws mounted in said first multitude of through-going holes and fixated to said first plurality of screw threads, and
         a second set of screws mounted in said second and third multitudes of through going holes and fixated to said second plurality of screw threads,
            said method comprising the two steps of:
         performing the sub-steps of: accommodating said torque supplying shaft inside of said through-going cylindrical bore of said hub component, subsequently accommodating said inner conical surface of said conical locking ring juxtaposed said outer conical surface of said hub component and subsequently tightening said first set of screws, and
         performing the sub-steps or accommodating said first specific friction surface of said first disc juxtaposed said third specific friction surface of said hub component, subsequently accommodating said fourth specific torque defining friction surface of said second annular disc juxtaposed said second specific torque defining friction surface of said hub component, subsequently accommodating said set of individual springs juxtaposed said third radial surface of said second annular disc and subsequently tightening and adjusting said second set of screws.
22. A method of limiting and adjusting torque between a rotational motion torque supplying shaft and a rotational motion torque receiving appliance by providing a torque limiting assembly comprising;
   a torque input part for coaxial connection to a rotational motion torque supplying shaft
      and
   a torque output part for connection to a rotational motion torque receiving appliance and for coaxial mounting in relation to said torque input part, said torque output part being configured as a torque first annular disc having opposite first and second sides including a first and a second specific torque defining friction respectively, said torque limiting first annular disc defining a first central aperture having a diameter substantial larger than the diameter of said torque supplying shaft,
   said torque input part including four components being:
      a hub component defining a through-going cylindrical bore defines a tight fit clearance with said torque supplying shaft, said hub component further defining a first radial surface including a third specific friction surface for contacting said first specific torque defining friction surface of said torque limiting first annular disc, said hub component further defining a reception surface opposite said first radial surface, said hub component further defining an outer conical surface tapering away from said first radial surface and defining a first maximum diameter juxtaposed said first radial surface and a first minimum diameter opposite said first radial surface, said hub component further having an annular flange located within said first central aperture when said third specific friction surface is contacting said first specific friction surface, said annular flange defining an exposed annular end face, said hub component, further including a first plurality of screw threads extending from said reception surface into said hub component and being parallel to said through-going cylindrical bore, and a second plurality of screw threads extending from said annular end face into said annular and parallel to said through going cylindrical bore,
      a conical locking ring defining an inner conical surface for cooperating with said outer conical surface of said hub component when said conical locking ring is mounted on said hub component, said inner conical surface defining a second minimum diameter larger than the diameter of said through-going cylindrical bore of said hub component and a second maximum diameter slightly smaller than said first maximum diameter and substantially larger than said first minimum diameter for providing a substantial contact surface between said inner conical surface and said outer conical surface when said conical locking ring is mounted on said hub component, said locking ring further comprising a first multitude of through-going holes being in registration or alignment with said first plurality of screw threads when said conical locking ring is mounted on said hub component,
      a second annular disc defining a second central aperture having a diameter slightly larger than the diameter of said torque supplying shaft and having opposite second and third radial surfaces, said second radial surface including a fourth specific torque defining friction surface for contacting said second specific torque defining friction surface, said second annular disc further comprising a second multitude of through-going holes being in registration or argument with said second plurality of screw threads when said second annular disc is mounted on said hub component, and
      a fixation device defining a third multitude of through-going holes being in registration or alignment with said second multitude of through-going holes and said second plurarity of screw threads when said fixation device is mounted on said hub component, said fixation device being in contact with and applying a clamping force onto said third radial surface of said second annular disc to achieve a first friction force between said first and third specific torque defining friction surfaces and a second friction force between said second and fourth specific torque defining friction surfaces, said torque limiting assembly further comprising:
         a first set of screws mounted in said first multitude of through-going holes and fixated to said first plurality of screw threads, and
         a second set of screws mounted in said second and third multitudes of through going holes and fixated to said second plurality of screw threads,
            said method comprising the two main steps of:
         performing the sub-steps of: accommodating said torque supplying shaft inside of said through-going cylindrical bore of said hub component, subsequently accommodating said inner conical surface of said conical locking ring juxtaposed said outer conical surface of said hub component and subsequently tightening said first set of screws, and
         performing the sub-steps of accommodating said first specific friction surface of said first annular disc juxtaposed said third specific friction surface of said hub component, subsequently accommodating said fourth specific torque defining friction surface of said second annular disc juxtaposed said second specific torque defining friction surface of said hub component, subsequently accommodating said fixation device juxtaposed said third radial surface of said second annular disc and subsequently tightening and adjusting said second set of screws.
23. The method according to any of the points 20-23, wherein said torque limiting assembly comprising any of the features of points 3 and 5 to 19.

## Claims

1. A slip measurement assembly for detecting a slip between an input shaft and an output shaft of a torque limiter assembly, said slip measurement assembly comprising:
a first rotation sensor generating a first rotation signal in response to the rotational motion of said input shaft, preferably by measuring the rotational speed of the input shaft,
a second rotation sensor generating a second rotation signal in response to the rotational motion of said output shaft, preferably by measuring the rotational speed of the output shaft,
a torque sensor generating a torque signal in response to the torque applied to said input shaft and/or said output shaft, and
a processing unit connected to said first rotation sensor, said second rotation sensor and said torque sensor for receiving said first rotation signal, said second rotation signal and said torque signal and determining a relative rotation value and a torque value associated with said relative rotation value on the basis of said first rotation signal, said second rotation and said torque signal.

2. The slip measurement assembly according to claim 1, wherein said first rotation sensor and/or said second rotation sensor comprising:
an impulse generator for being mounted synchronously rotatable in relation to said input shaft and/or said output shaft, and,
an impulse receiver for being mounted fixedly and non-rotatable in a juxtaposing location in relation to said impulse generator,
said first rotation signal and/or said second rotation signal representing the number of impulses received by said impulse receiver during a specific time period

3. The slip measurement assembly according to claim 2, wherein a plurality of impulse generators and/or impulse receivers are mounted along an angular direction of the outwardly facing surface of said input shaft and/or said output shaft.

4. The slip measurement assembly according to any of the claims 2-3, wherein said impulse generator comprises a reflector or a hole plate and said impulse receiver comprises a photo detector, or, alternatively, wherein said impose generator comprises a magnet, and said impulse receiver comprises a coil,

5. The slip measurement assembly according to any of the preceding claims, wherein each of said input shaft and said output shaft comprises at least one torque sensor, preferably more than one such as 2-3, more preferably 4-5 or more.

6. The slip measurement assembly according to any of the preceding claim, wherein said torque sensor comprising a strain gauge.

7. The slip measurement assembly according to any of the preceding claims, wherein:
said torque sensor is detachably mounted on said input shaft and/or said output shaft

8. The slip measurement assembly according to any of the preceding claims, wherein said torque sensor and/or said first rotation sensor and/or said second rotation sensor unit is communicating via wireless technology with said processing unit.

9. A torque limiter assembly including an input shaft, an output shaft and a torque limiter located between said input shaft and said output shaft, said torque limiter assembly further including a slip measurement assembly according to any of the 1-8.

10. The torque limiter assembly according to claim 9, wherein said input shaft and/or said output shaft further including a gear box.

11. A rotating mechanical power transmission system including the torque limiter assembly of claim 9-10, she rotating mechanical power transmission system further including a torque generating device such as an engine, a wind turbine, a water turbine or a steam turbine, connected to said input shaft, and, a torque receiving device, such as an electrical generator or hydraulic pump, connected to said torque output shaft.

12. The rotating mechanical power transmission system according to claim 11, wherein said torque generating device and/or said torque receiving device is at least partially controlled by said processing unit.

13. A method of determining a relative rotation value and a torque value associated with said relative rotation value, said method comprising the steps of:
providing a torque limiter assembly induding an input shaft, an output shaft and a torque limited located between said input shaft and said output shaft, said torque limiter assembly further including a slip measurement assembly including a first rotation sensor, a second rotation sensor, a torque sensor, and a processing unit connected to said first rotation sensor, said second rotation sensor and said torque sensor,
generating a first rotation signal in response to the rotational motion of said input shaft by using said first rotation sensor,
generating a second rotation signal in response to the rotational motion of said output shaft by using said second rotation sensor,
generating a torque signal in response to the torque applied to said input shaft and/or said output shaft by using said torque sensor,
receiving said first rotation signal, said second rotation signal and said torque signal in said processing unit,
determining in said relative rotation value on the basis of said first rotation signal and said second rotation signal by using said processing unit, and,
determining said torque value on the basis of said torque signal by using said processing unit.

14. The method according to claim 13, wherein said method further including calculating and storing one or more technical values by using said processing unit, said technical values being:
absolute rotation speed of said first shaft, absolute rotation speed of said second shaft, relative rotation speed of said first and second shafts, accumulated angular-difference between said first and second shafts, torque on said first and/or second shafts.

15. The method according to claim 14, wherein said method further including the steps of:
mounting said torque limiter assembly between a torque generations device and/or a torque receiving device of a rotating mechanical power transmission and,
using said values for controlling said torque generating device and/or said torque receiving device of said rotating mechanical power transmission system, and/or, using said technical values when performing maintenance and/or adjustments on said rotating mechanical power transmission system.
